# EUROPÄISCHE PATENTSCHRIFT

(11) **EP 1 087 855 B1**
(45) Veröffentlichungstag und Bekanntmachung des Hinweises auf die Patenterteilung: **29.01.2003**
(21) Anmeldenummer: 99920446.4
(22) Anmeldetag: 12.05.1999
(51) Int. Cl.: B23K 15/00

(54) **VERFAHREN ZUM VERBINDEN EINES GUSSTEILES MIT EINEM TEIL AUS EINSATZGEHÄRTETEM STAHL UND BAUTEIL ERHÄLTLICH DURCH DIESES VERFAHREN**
METHOD FOR JOINING A CAST PART AND A CASE-HARDENED STEEL PART AND COMPONENT OBTAINABLE BY SAID METHOD
PROCEDE DE LIAISON D'UNE PIECE MOULEE EN FONTE ET D'UNE PIECE EN ACIER DURCI PAR CEMENTATION ET ELEMENT DE CONSTRUCTION PRODUIT SUSCEPTIBLE D'ETRE OBTENU PAR CE PROCEDE

(30) Priorität: 12.05.1998 AT 80798
(43) Veröffentlichungstag der Anmeldung: 04.04.2001
(73) Patentinhaber: Steyr-Daimler-Puch Fahrzeugtechnik AG & CO. KG, 1010 Wien (AT)
(72) Erfinder: KEHRER, Oskar, A-8044 Graz (AT)
(74) Vertreter: Kovac, Werner, Dipl.-Ing.
(86) Internationale Anmeldenummer: AT9900117
(87) Internationale Veröffentlichungsnummer: WO99058287

(56) Entgegenhaltungen:
- DE-A- 2 423 577
- DE-C- 3 742 717
- US-A- 4 756 466

## Beschreibung

Die Erfindung handelt von einem Verfahren zum Verbinden eines Gußteiles mit einem Teil aus einsatzgehärtetem Stahl und von einem Bauteil.

Die Verbindung von Bauteilen aus unterschiedlichen und zum Teil fertig bearbeiteten und bereits gehärteten Teilen ist in der modernen Fertigungstechnik sehr erwünscht, weil eine Anordnung häufig unterschiedlichen Anforderungen genügen muß, die mit einem einzigen Material nicht erreichbar sind. Dann müssen für einzelne Elemente eines Bauteiles verschiedene Werkstoffe eingesetzt werden, um ein Optimum an wirtschaftlicher Herstellung und mechanischen Eigenschaften zu erreichen.

So stellt sich beispielsweise in Antriebssträngen von Kraftfahrzeugen oft das Problem, ein fein bearbeitetes und gehärtetes Zahnrad mit einem hohlen Gehäuseteil komplizierter Form, der naturgemäß ein Gußteil ist, zu verbinden. Zahnräder sind meist einsatzgehärtet, ihr Grundgefüge ist dadurch blindgehärtet, was zwar hohe Festigkeit, aber sehr geringe Zähigkeit und Bruchdehnung, verglichen mit normalgeglühtem Stahl mit ferritisch-perlitischem Gefüge, bedeutet. Die Gußteile bestehen vorzugsweise aus Stahlguß, weissem Temperguß oder Sphäroguß, ihr Kohlenstoffgehalt beträgt meist über 2 %.

Üblicherweise werden solche Teile mittels hochfester Schrauben verbunden. Solche Schraubverbindungen erfordern aber ausreichend dimensionierte Flansche und erhöhen so Raumbedarf und Gewicht des Bauteiles. Nebstbei ist der Zeitaufwand bei Zusammenbau und beim Zerlegen, vor allem wenn die Verbindung nach langer Betriebsdauer unlösbar geworden ist, erheblich. Schweissen verbietet sich wegen des fertig bearbeiteten Zustandes (Verzug) und weil sowohl Guß als auch einsatzgehärteter Stahl schwer schweißbar sind. Ausserdem muß bei den hohen dynamischen Belastungen die Verbindung absolut sicher und mit hoher Qualität reproduzierbar herzustellen sein.

Aus der EP 277 712 A, die als nächstliegender Stand der Technik angesehen ist, ist ein aus zwei miteinander verschweißten Metallteilen bestehender Ventilstößel bekannt. Ein Teil besteht aus hochkohlenstoffhaltigem oder legiertem Stahl oder aus härtbarem Gußeisen; der andere aus Flußstahl (Kohlenstoffgehalt 0,05 bis 0.2 %), dessen Schweißeigenschaften unproblematisch sind. Die beiden Teile werden ohne vorherige Schweißnahtbearbeitung mittels eines Hochenergiestrahles miteinander verschweißt. Es gibt also keinen Raum für eine flüssige Schweißzone. Der eine Teil wird an der Berührungsfläche entkohlt. Zur Ausbildung einer austenitischen Schweißzone wird eine Nickelscheibe eingelegt oder der eine oder andere Teil an seiner Schweißfläche vernikkelt.

Nachteilig ist daran die vor dem Schweißen notwendige Entkohlung und die vorher und nachher erforderliche Wärmebehandlung. Durch die einander berührenden zu verschweißenden Flächen ist auch eine über die Tiefe der Naht eleichmäßiee Schweißune nicht gewährleistet, weil der Hochenergiestrahl auf seinem Weg entlang der Flächen bereits Energie abgibt und dadurch in der Tiefe nur mehr schwach ist. Das eigentliche Problem ist somit schon in dem einfachen Fall, in dem nur einer der Teile aus einem schwer schweißbaren Werkstoff besteht. nicht gelöst: die Beherrschung des Kohlenstoffes und die Herstellung einer über die gesamte Schweißnaht rißsicheren Verbindung. Letztere ist aber zur Übertragung großer Kräfte sehr wichtig.

Es ist daher Ziel der Erfindung, eine den Belastungs- und Werkstoffverhältnissen gewachsene und seriensichere Schweißverbindung solcher Bauteile zu ermöglichen. Das wird mittels der im Anspruch 1 definierten Schritte und der im Anspruch 6 definierten Merkmale erreicht. Es besteht darin, daß an den ansonsten fertig bearbeiteten Teilen die zu verbindenden Flächen zur Schweißvorbereitung zumindest teilweise abgetragen werden, sodaß eine schmale U-Nut, Y-Nut oder V-Nut entsteht, und daß sodann die Teile aneinandergefügt und unter Zufuhr eines austenitischen Schweißdrahtes mittels eines Hochenergiestrahles verschweißt werden.

Dadurch, daß sich die beim Schweissen mit Hochenergiestrahl (z.B. Laser oder Elektronenstrahl) unübliche Schweißnahtvorbereitung wie für eine schmale U-Naht. Y-Naht oder V-Naht oder deren Mischformen über einen größeren Teil der zu verschweißenden Flächen erstreckt, wird ein Raum geschaffen, in dem viel von dem Material des zugeführten Schweißdrahtes einlegiert wird. Dank dem scharf gebündelten Hochenergiestrahl werden die Wände des Raumes (die aufgekohlten zu verbindenden Flächen der Teile) nur mit sehr geringer Tiefe aufgeschmolzen. Deshalb kann dort nur wenig Kohlenstoff in die Schweiße einlegieren, zumal sich der wenige Kohlenstoff über das Volumen des Raumes verteilt. Dadurch bleibt in der Schweißzone und auf deren beiden Seiten das Gefüge großteils erhalten. In dem Raum bildet sich aus dem zugeführten Schweißdraht eine austenitische Schweiße, die mit den beiden Grundwerkstoffen kompatibel ist. Dadurch entsteht eine rißsichere Schweißnaht hoher Dauerfestigkeit, bei guter Reproduzierbarkeit trotz in der Praxis auftretender chargenbedingter Schwankungen.

Da bei einem Hochenergiestrahl die auf die Länge der Schweißnaht bezogene zugeführte Wärmemenge klein ist, ist die Wärmeeinflußzone am Rand und die dadurch entstehende spröde Zone so schmal, daß sie sich auf die Elastizität der gesamten Verbindung nicht nennenswert auswirkt. Die schmale Schweißnut (sie ist wesentlich schmaler als bei einer konventionellen Lichtbogenschweißnaht) bietet weiters den Vorteil, einerseits das Eindringen des Hochenergiestrahles nicht zu behindern und andererseits dem Strahl doch so nahe zu sein, daß dessen Wand die erforderliche Schweißtemperatur erreicht, und auch nicht überschreitet.

Somit wird der Hochenergiestrahl nicht nur hinsichtlich seiner hohen Energiekonzentration und dadurch geringen Aufhetzung des Werkstükkes, sondern auch zu einem metallurgischen Zweck genutzt. Das Material der schlecht verschweißbaren Grundwerkstoffe wird so durch einen mit beiden Grundwerkstoffen kompatiblen Zusatzwerkstoff ersetzt.

In einer bevorzugten Ausführungsweise sind besonders hoch belastbare Verbindungen herstellbar. Sie besteht darin, daß die bei der Schweißnahtvorbereitung hergestellte Schweißnut einen Querschnitt aufweist, der dem Querschnitt der fertigen Schweißnaht entspricht, insbesondere äquidistant ist (Anspruch 2). Dadurch bleibt die aufgeschmolzene Zone der zu verschweißenden Flächen über die gesamte Tiefe gleich schmal, wodurch die hohe Qualität der Verbindung über die gesamte Tiefe der Naht gesichert ist.

In Versuchen wurde festgestellt, daß bei hoher Maßhaltigkeit der Verbindung eine optimale Durchschweissung und damit eine maximale Dauerfestigkeit erzielt wird, wenn die Tiefe der U-Nut oder V-Nut 2/3 bis 7/8 der Strahleindringtiefe beträgt (Anspruch 3).

Der Schweißdraht kann so beschaffen sein, daß er bei der beim Schweissen mit Hochenergiestrahl sehr hohen Abkühlungsgeschwindigkeit ein austenitisches Gefüge spontan ausbildet, er kann aber auch durch Legierungselemente von vornherein austenitisch sein. Vorteilhafterweise enthält der Schweißdraht mindestens 50 % Nickel (Anspruch 4). Dadurch wird die Austenitbildung unabhängig von der Abkühlungsgeschwindigkeit sichergestellt und das Nickel bildet in der Aufmischung mit den beiden Grundwerkstoffen eine besonders zuverlässige rißfreie Pufferzone zwischen den beiden verbundenen Teilen.

In besonders schwierigen Fällen kann es vorteilhaft sein, die einsatzgehärtete Schicht vor der Schweißnahtvorbereitung zumindest teilweise abzutragen (Anspruch 5), soferne das bei der Schweißnahtvorbereitung selbst geschieht. Solche Fälle liegen vor, wenn ein besonderes Einsatzverfahren angewendet wird, wenn sich die an die zu verschweissenden Flächen anschließenden Querschnitte bzw die Steifigkeiten der verbundenen Teile stark unterscheiden.

In solchen Fällen ist es auch vorteilhaft, wenn mindestens einer der beiden Teile parallel zur Schweißnaht eine weitere Nut mit rundem Nutgrund aufweist (Anspruch 7). Eine derartige örtliche Querschnittsverminderung hat bei Schweißverbindungen kreissymmetrischer Teile in einer achsnormalen Ebene, besonders aber bei zylindrischen Schweißflächen, die vorteilhafte Wirkung, Differenzen des Schrumpfes bzw der Schrumpfgeschwindigkeit auszugleichen, ohne jedoch eine Kerbwirkung auszuüben.

Im Folgenden wird die Erfindung anhand von Abbildungen beschrieben und erläutert. Es zeigen:
- Fig.1:: Ein erstes Ausführungsbeispiel eines erfindungsgemäßen Bauteiles,
- Fig.2:: Detail II in Fig.1, vergrößert,
- Fig.3:: ein zweites Ausführungsbeispiel eines erfindungsgemäßen Bauteiles.
- Fig.4:: Detail IV in Fig.3, vergrößert.

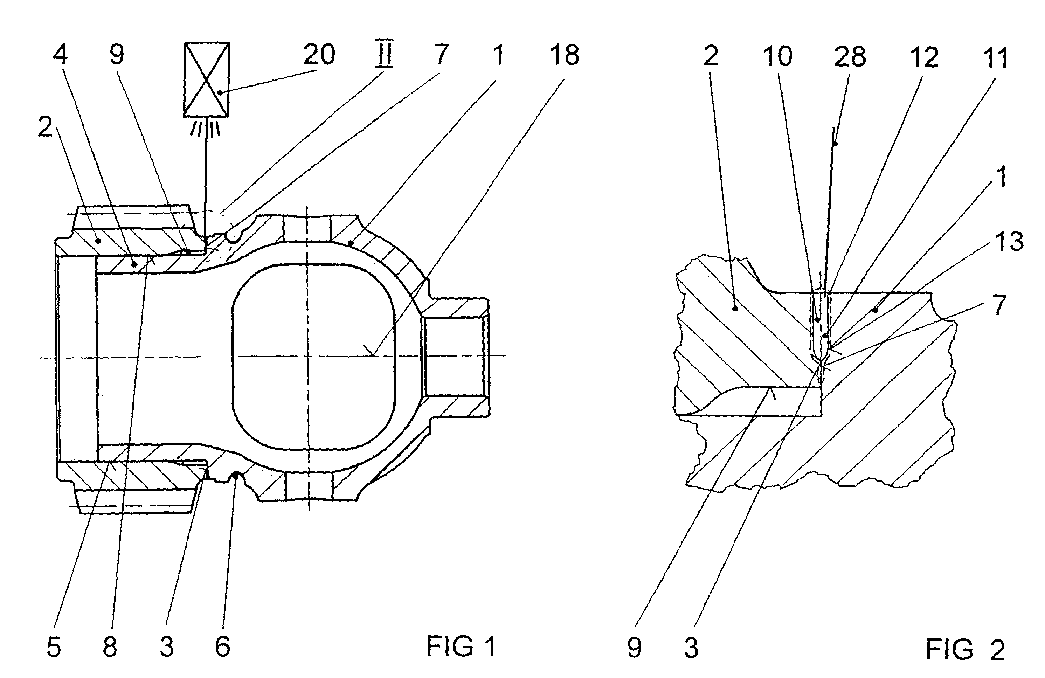

In Fig. 1 ist das Gehäuse eines Differentiales (1) und ein mit diesem zu einem Bauteil verbundenes Zahnrad (2) bezeichnet. Das Gehäuse 1 besteht aus weissem Temperguß. Stahlguß oder Sphäroguß, zB GGG 40,50,60 oder GTW-S38, das Zahnrad 2 aus Stahl und ist einsatzgehärtet. Das Gehäuse 1 weist eine erste achsnormale zu verschweißende Fläche 3 auf, an die ein zylindrischer Kragen 4 anschließt. der eine äussere zylindrische Paßfläche 5 bildet. Das Gehäuse 1 kann an einer Stelle größerer Wandstärke mit einer parallel zur ersten zu verschweißenden Fläche verlaufenden Umfangsnut 6 versehen sein. die im Querschnitt gerundet ist. Am Zahnrad 2 ist eine in einer Ebene normal zur Achse liegende zweite zu verschweißende Fläche 7 und eine zylindrische Paßfläche 8 vorgesehen, die auf der zylindrischen Paßfläche 5 sitzt. Die zylindrische Paßfläche 8 kann am Übergang zur zweiten zu verschweißenden Fläche 7 zurückgenommen sein, sodaß sich eine Erweiterung 9 bildet. Diese erleichtert die Fertigung und das Aufschieben des Zahnrades auf den Kragen 4 und verbessert erforderlichenfalls die Durchschweißung der Wurzel. Mit 18 ist die Drehachse des Bauteiles und mit 20 der Schweißkopf bezeichnet.

Fig.2 zeigt die beiden Teile gefügt und in zur Schweißung vorbereitetem Zustand. Es ist zu erkennen, daß die zweite zu verschweißende Fläche 7 nach innen nur bis zur Erweiterung 9 reicht. Sie ist zum größeren Teil abgetragen, sodaß die erste Hälfte 10 einer schmalen Nut entsteht. Der Querschnitt der Nut kann die Form eines Y, U oder V, oder Kombinationen dieser haben. Die bei der Schweißvorbereitung hergestellte Schweißnut hat idealerweise einen Querschnitt, der dem der fertigen Schweißnaht > äquidistant ist. In derselben Weise ist die erste zu verschweißende Fläche bearbeitet. Am Übergang zur äußeren Zylinderfläche kann eine Rundung oder eine gebrochene Kante 12 vorgesehen sein. In diese schmale U-Nut 10,11 wird beim Schweißen mittels eines Hochenergiestrahles (Elektronen- oder Laserstrahl) das Material eines austenitischen Schweißdrahtes 28 eingeführt, sodaß sich in der U-Nut eine Schweiße bildet.

Wegen des schartsebündelten Strahles und der hohen Schweißgeschwindigkeit werden die Wände 10.11 der U-Nut nur in geringer Tiefe aufgeschmolzen. sodaß nur wenig Kohlenstoff aus den beiden Teilen einlegieren kann und sich in der Schweiße ein stabiles austenitisches Gefüge bilden kann. Die Schweiße bildet in Wandnähe eine sehr schmale Wärmeeinflußzone mit martensitischem Gefüge oder Zwischenstufen-Gefüge auf der Stahlseite und martensitischem, ledeburitischem oder Zwischenstufen-Gefüge auf der Gußseite. Die Grenze 13 der Schweißzone ist strichliert eingezeichnet. Die Schweißung findet in einer inerten oder aktiven Schutzgasatmosphäre statt. Der zugeführte Schweißdraht 28 enthält einen mit den beiden Grundwerkstoffen kompatiblen Zusatzwerkstoff, vorzugsweise einen austenitischen Werkstoff, etwa mit einem Nickelgehalt von 20 bis 100 %.

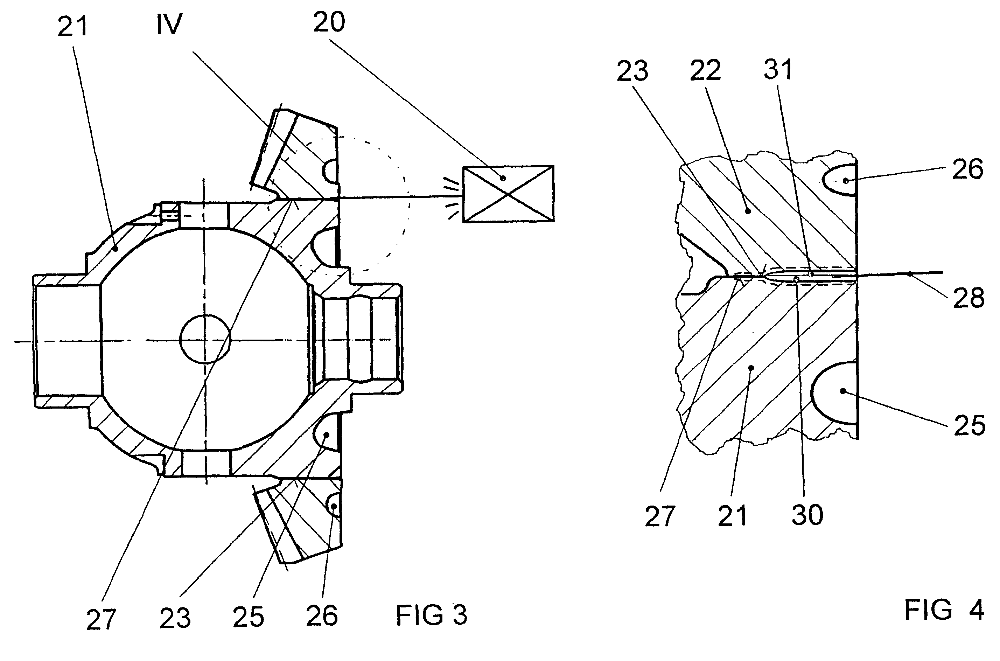

Fig.3 zeigt einen anderen Bauteil, der wieder aus einem Gehäuse 21 und einem Zahnrad 22, hier einem Tellerrad besteht. Die Werkstoffpaarung ist im wesentlichen dieselbe. Der Unterschied gegenüber dem vorherigen Ausführungsbeispiel besteht darin, daß die beiden zu verschweißenden Flächen 23,27 Zylinderflächen sind. Mit 25 und 26 sind wieder runde Nuten bezeichnet. die dem Ausgleich von Wärmedehnungen dienen sollen.

Fig.4 zeigt im Detail die vorbereitenden Schweißflächen 23,27 die beide wieder je die erste und zweite Hälfte 30,31 einer schmalen U-förmigen Nut zeigen, die zur Schweißnahtvorbereitung abgetragen wurden, sodaß nur mehr der kleinere Teil der zu verschweißenden Flächen gleichzeitig als Paßfläche dient. An der Paßfläche 27 des Tellerrades 22 kann die einsatzgehärtete Schicht abgetragen sein, was in der Zeichnung nicht erkennbar ist.

## Patentansprüche

1. Verfahren zum Verbinden eines Gußteiles (1;21) mit einem Teil (2;22) aus einsatzgehärtetem Stahl durch Schweißen, bestehend in den folgenden Schritten:
a) an den ansonsten fertig bearbeiteten Teilen (1,2;21,22) werden die zu verschweißenden Flächen (3,7;23,27) zur Schweißvorbereitung zumindest teilweise abgetragen, sodaß eine schmale U-Nut, Y-Nut oder V-Nut (10,11;30,31) entsteht,
b) die Teile (1,2;21,22) werden sodann aneinandergefügt und unter Zufuhr eines austenitischen Schweißdrahtes (28) mittels eines Hochenergiestrahles verschweißt.

2. Verfahren nach Anspruch 1, **dadurch gekennzeichnet, daß** die bei der Schweißnahtvorbereitung hergestellte Schweißnut einen Querschnitt aufweist, der dem Querschnitt der fertigen Schweißnaht entspricht, insbesondere äquidistant ist.

3. Verfahren nach Anspruch 1, **dadurch gekennzeichnet, daß** die Tiefe der Nut (10,11;30,31) 2/3 bis 7/8 der Schweißtiefe beträgt.

4. Verfahren nach Anspruch 1, **dadurch gekennzeichnet, daß** der austenitische Schweißdraht (28) mindestens 30 % Nickel enthält.

5. Verfahren nach Anspruch 1, **dadurch gekennzeichnet, daß** die Einsatzschicht bei der Schweißvorbereitung zumindest teilweise abgetragen wird.

6. Bauteil, erhalten nach dem Verfahren gemäß einem der Ansprüche 1 bis 4, bestehend aus einem mit einem Teil (1;21) aus Stahlguß, weißem Temperguß oder Sphäroguß verschweißten Teil (2;22) aus einsatzgehärtetem Stahl, wobei die verschweißten Flächen (3,7;23,27) kreisringförmig sind, wobei zwischen diesen Teilen (1,21; 2,22) eine in Form eines schmalen U, V oder Y ausgebildete Schweißnaht vorhanden ist und wobei aus dem zugeführten Schweißdraht eine austenitische Schweiße gebildet ist.

7. Bauteil nach Anspruch 6, **dadurch gekennzeichnet, daß** mindestens einer der beiden Teile (1,2;21,22) parallel zur Schweißnaht eine weitere Nut (6;25, 26) mit rundem Nutgrund aufweist.

## Claims

1. A process of connecting, by welding, a casting (1, 21) to a part (2, 22) consisting of a case-hardened steel, consisting of the following process stages:
a) by way of preparatory measures for the welding process, the surfaces (3, 7; 23, 27) of the otherwise finish-machined parts (1, 2; 21, 22) to be welded together are at least partially removed, so that there is obtained a narrow U-groove, Y-groove or V-groove (10, 11; 30, 31);
b) the parts (1, 2; 21, 22) are then joined and, by adding an austenitic welding wire, they are welded together by means of a high-energy beam.

2. A process according to claim 1,
**characterised in**
**that** the welding groove produced in the course of the preparatory measures for the welding operation comprises a cross-section which corresponds to the cross-section of the finished weld, in particular that it is equidistant.

3. A process according to claim 1
**characterised in**
**that** the depth of the groove (10, 11; 30, 31) amounts to 2/3 to 7/8 of the welding depth.

4. A process according to claim 1,
**characterised in**
**that** the austenitic welding wire (28) contains at least 30% nickel.

5. A method according to claim 1,
**characterised in**
**that**, during the preparatory measures for the welding operation, the case-hardened layer is at least partially removed.

6. A component obtained on the basis of the process according to any one of claims 1 to 4, consisting of a part (2, 22) made of case-hardened steel and welded to a part (1, 21) made of a steel casting, white malleable cast iron or spheroidal graphite cast iron, wherein the welded surfaces (3, 7; 23, 27) are annular in shape, wherein, between said parts (1, 21; 2, 22), there is provided a weld in the shape of a narrow U, V or Y and wherein the added welding wire is used to produce an austenitic weld pool.

7. A component according to claim 6,
**characterised in**
**that** at least one of the two parts (1, 2; 21, 22) comprises a further groove (6; 25, 26) which is provided with a round groove base and extends parallel to the weld.

## Revendications

1. Procédé permettant de relier par l'intermédiaire d'une soudure une pièce moulée en fonte (1 ; 21) à une pièce (2 ; 22) réalisée dans un acier cémenté, comprenant les étapes consistant à :
a) au niveau des pièces qui sont façonnées (1, 2 ; 21, 22), les surfaces à souder (3, 7 ; 23, 27) sont, au moins en partie, enlevées pour faire l'objet du pré-traitement de soudure, de telle sorte qu'il apparaît une rainure étroite en U, en Y ou en V (10, 11 ; 30, 31),
b) les pièces (1, 2 ; 21, 22) sont alors jointes et soudées l'une à l'autre à l'aide d'un faisceau à haute énergie, en introduisant un fil de soudure en austénite (28).

2. Procédé selon la revendication 1, **caractérisé en ce que** la rainure réalisée lors du pré-traitement présente une section qui correspond à la section du fil de soudure terminé, et en particulier est équidistante.

3. Procédé selon la revendication 1, **caractérisé en ce que** la profondeur de la rainure (10, 11 ; 30, 31) représente 2/3 à 7/8 de la profondeur de la soudure.

4. Procédé selon la revendication 1, **caractérisé en ce que** le fil de soudure en austénite (28) contient au moins 30 % de nickel.

5. Procédé selon la revendication 1, **caractérisé en ce que**, pendant le pré-traitement de soudure, la couche cémentée est enlevée au moins en partie.

6. Composant obtenu en mettant en oeuvre un procédé selon une quelconque des revendications 1 à 4, constitué d'au moins une pièce (1 ; 21) constituée d'une pièce en acier cémenté soudée avec une pièce en fonte d'acier, en fonte malléable blanche ou en fonte sphérolithique (2 ; 22), les surfaces soudées (3, 7 ; 23, 27) étant de forme annulaire, moyennant quoi entre les deux pièces (1, 21 ; 2, 22) il existe un fil de soudure se présentant sous la forme d'un U, V ou Y étroit, et moyennant quoi une soudure en austénite est constituée du fil de soudure introduit.

7. Composant selon la revendication 6, **caractérisé en ce que** l'une des deux pièces (1, 2 ; 21, 22) présente une autre rainure (6 ; 25, 26) avec un fond de rainure rond.
